# EUROPÄISCHE PATENTSCHRIFT

(11) **EP 4 388 856 B1**
(45) Veröffentlichungstag und Bekanntmachung des Hinweises auf die Patenterteilung: **08.04.2026**
(21) Anmeldenummer: 23204249.9
(22) Anmeldetag: 18.10.2023
(51) Int. Cl.: A01D 41/127, A01D 45/02

(54) **ERNTEMASCHINE MIT EINEM KORNVERLUSTSENSOR UMFASSENDEN ERNTEVORSATZGERÄT**
HARVESTING MACHINE WITH A HARVESTING ATTACHMENT COMPRISING A GRAIN LOSS SENSOR
MOISSONNEUSE DOTÉE D'UN APPAREIL DE RÉCOLTE COMPRENANT UN CAPTEUR DE PERTE DE GRAIN

(30) Priorität: 19.12.2022 DE 102022133920
(43) Veröffentlichungstag der Anmeldung: 26.06.2024
(73) Patentinhaber: CLAAS Selbstfahrende Erntemaschinen GmbH, 33428 Harsewinkel (DE)
(72) Erfinder: Driftschröer, Peter, 33442 Herzebrock-Cöarholz (DE); Lütke Harmann, Tim, 48324 Sendenhorst (DE); Raubart, Michael, 33428 Harsewinkel (DE)
(74) Vertreter: CLAAS Gruppe

(56) Entgegenhaltungen:
- EP-A1- 4 353 063
- EP-B1- 3 014 973
- CN-A- 109 548 472
- US-A1- 2018 139 902
- ANONYMOUS: "Measuring and Reducing Corn Field Losses | Pioneer Seeds", 30 September 2020 (2020-09-30), XP093143123, Retrieved from the Internet <URL:https://web.archive.org/web/20200930152905/https://www.pioneer.com/us/agronomy/corn-field-losses.html> [retrieved on 20240319]

## Beschreibung

Die vorliegende Erfindung betrifft ein Erntevorsatzgerät zur Ernte von in Pflanzenreihen ausgebildetem Erntegut sowie eine selbstfahrende landwirtschaftliche Arbeitsmaschine mit einem solchen Erntevorsatzgerät, wobei das Erntevorsatzgerät mehrere Pflückeinheiten aufweist und jede Pflückeinheit wenigstens zwei Pflückwalzen zur Trennung des Ernteguts von dem diesen tragenden Pflanzenteil aufweist, wobei das Erntevorsatzgerät wenigstens einen Kornverlustsensor zur Erfassung eines Kornverlustes des vom tragenden Pflanzenteil abgetrennten Ernteguts aufweist. Ferner betrifft die Erfindung das Erntevorsatzgerät für eine solche selbstfahrende landwirtschaftliche Arbeitsmaschine.

Die CN109548472A offenbart ein Steuerungssystem eines selbstfahrenden Mähdreschers, das die Drehzahl der Pflückwalzen eines Maisvorsatzes in Abhängigkeit vom sensorisch erfassten Kolbenverlust am Maisvorsatz anpasst. Dadurch sollen Kolbenverluste minimiert werden.

Die EP 2 681 984 B1 betrifft einen Mähdrescher mit einem Schneidwerk, das unter anderem aus einer Haspel, einem mit einem Mähbalken versehenen Schneidtisch und einer Schneidwerksmulde besteht. Die rotativ angetriebene Haspel weist mehrere mit Abstand zueinander auf einer Haspelwelle angeordnete Tragsterne sowie an diesen geführte mit Förderzinken versehene Tragbalken auf und ist über Tragarme an der Schneidwerksmulde geführt, wobei sie gegenüber der Schneidwerksmulde und dem dieser vorgeordnete Schneidtisch zumindest höhenverstellbar ist. Der Mähdrescher weist außerdem einen Sensor zur Ermittlung eines Istwertes der Höhenlage der Haspel, einen mit der Schneidwerksmulde verbundenen Schrägförderer, eine diesem in Richtung eines Erntegutflusses nachgeordnete Dresch- und Trenneinrichtung sowie einer Steuereinheit, die mit dem Sensor und zumindest einem Messwertaufnehmer zur Erfassung von Erntebedingungen des Mähdreschers und mit zur Höhenverstellung der Haspel dienenden Stellelementen verbunden ist, auf. Der zumindest eine Messwertaufnehmer soll zur Erfassung von Schwankungen des Erntegutflusses in zumindest einem dem Schneidtisch nachgeordneten Förderorgan und/oder zur Erfassung einer Bestandshöhe und/oder zur Erfassung von Spritzkornverlusten ausgebildet sein.

Die EP 2 702 855 B1 betrifft eine Maiskopf-Reiheneinheit mit einer ersten und einer zweiten sich in Längsrichtung erstreckenden Abstreifplatte, die an einem Rahmen angebracht sind und gegenüberliegende Abstreifkanten aufweisen, die einen Spalt zwischen sich bilden. Der Rahmen umfasst ferner eine Einstellanordnung, die den Rahmen und mindestens eine der ersten und zweiten Abstreiferplatten funktionsfähig verbindet, um mindestens eine der ersten Abstreiferplatte und der zweiten Abstreiferplatte in Bezug auf die andere Abstreiferplatte selektiv und in Querrichtung zu bewegen, um die Breite des Spalts zu verändern. Eine Verlusterkennungsvorrichtung ist funktionsmäßig mit dem Rahmen verbunden, um die Messung von Maiskörnern zu ermöglichen, die als Ergebnis des Ziehens von Maisstängeln durch den Spalt verloren gehen, um Maisähren von den Stängeln zu trennen.

Die EP 3 014 973 B1 betrifft ein Schneidwerk für einen Mähdrescher, wobei das Schneidwerk eine Vielzahl von Ernteeinheiten umfasst, wobei die Ernteeinheiten konfiguriert sind, um Maisähren von Maisstängeln zu trennen. Jede der Ernteeinheiten umfasst eine Deckplattenbaugruppe und eine Aktuatorbaugruppe, die so konfiguriert ist, dass sie eine Breite eines Halmaufnahmekanals durch Einstellen einer Position von mindestens einer Deckplatte der Deckplattenbaugruppe einstellt. Das Schneidwerk umfasst ferner einen Kernsensor zum Erzeugen eines Signals, das für das Vorhandensein von Körnern repräsentativ ist, die sich von den Maisähren gelöst haben, und eine Steuereinheit zum Empfangen des Signals von dem Kernsensor und zum Erzeugen eines Aktuatorsteuersignals auf der Grundlage des Signals zum Steuern der Aktuatorbaugruppen, wodurch die Breite der Halmaufnahmekanäle gesteuert wird.

Die EP 3 284 334 B1 betrifft ein System zur Erfassung von Kornverlusten für eine landwirtschaftliche Erntemaschine, wobei mindestens eine Wärmeerfassungsvorrichtung an einem Erntevorsatz der landwirtschaftlichen Erntemaschine angebracht ist und Infrarotbilder des Bodens aufnimmt. Ein Steuergerät erkennt anhand der Infrarotbilder Vorernteverluste und Ernteverluste, indem es einen Temperaturunterschied oder einen charakteristischen Wärmeunterschied zwischen den Vorernteverlusten, den Ernteverlusten und dem Boden feststellt. Das Steuergerät kann mit einem Ertragsmonitor kommunizieren oder in diesen integriert werden, um einem Bediener der landwirtschaftlichen Erntemaschine Informationen über den Vorernteverlust und den Ernteverlust zu liefern.

In US 2018/139902 A1 wird vorgeschlagen, an einem Erntevorsatzgerät oberhalb von Abdeckungen, die zum oberseitigen Abdecken von Pflückwalzen dienen, weitere Walzen vorzusehen. Diese weiteren Walzen haben im Gegensatz zu den Pflückwalzen die Funktion, das Erntegut in horizontaler Richtung an das hintere Ende des Erntevorsatzgeräts, insbesondere an eine Querförderschnecke heranzuführen und dadurch die Fahrbewegung, insbesondere die Fahrgeschwindigkeit der mit dem Erntevorsatzgerät versehenen, selbstfahrenden landwirtschaftlichen Arbeitsmaschine zu kompensieren.

Der vorliegenden Erfindung liegt die Aufgabe zugrunde, eine verbesserte oder zumindest eine alternative Ausführungsform einer selbstfahrenden landwirtschaftlichen Arbeitsmaschine und/oder eines Erntevorsatzgerätes anzugeben, wobei insbesondere eine Verringerung von Kornverlusten bereitgestellt wird.

Diese Aufgabe wird erfindungsgemäß durch die Gegenstände des Anspruchs 1 gelöst. Vorteilhafte Ausführungsformen sind Gegenstand der abhängigen Ansprüche.

Erfindungsgemäß wird
- ein Erntevorsatzgerät sowie
- eine mit dem Erntevorsatzgerät versehene selbstfahrende landwirtschaftliche Arbeitsmaschine
   bereitgestellt,

- wobei das Erntevorsatzgerät zur Ernte von in Pflanzenreihen ausgebildetem Erntegut mehrere Pflückeinheiten aufweist und jede Pflückeinheit
   - zwei Pflückwalzen zur Trennung des Ernteguts von einem das Erntegut (4) tragenden Pflanzenteil,
   - zwei Förderketten zur Förderung des Ernteguts und
   - eine Häckselvorrichtung
      aufweist,
- wobei das Erntevorsatzgerät wenigstens einen Kornverlustsensor zur Erfassung eines Kornverlustes von Verlustkörnern des vom tragenden Pflanzenteil abgetrennten Ernteguts aufweist.

Erfingungsgemäß ist vorgesehen, dass das Erntevorsatzgerät oder die selbstfahrende landwirtschaftliche Arbeitsmaschine eine Steuer- und/oder Regeleinrichtungaufweist, die dazu vorgesehen und eingerichtet ist, eine Pflückwalzendrehzahl aller Pflückwalzen aller Pflückeinheiten des Erntevorsatzgerätes
- in Abhängigkeit des mittels des Kornverlustsensors erfassten Kornverlustes, aber
- unabhängig von Drehzahlen anderer Komponenten des Erntevorsatzgerätes und insbesondere
- unabhängig von der Drehzahl der Förderketten
   einzustellen, zu steuern und/oder zu regeln.

Die vorliegende Erfindung beruht auf dem allgemeinen Gedanken, dass die selbstfahrende landwirtschaftliche Arbeitsmaschine, insbesondere ein selbstfahrender Mähdrescher, eine Steuer- und/oder Regeleinrichtung aufweist, die dazu vorgesehen und eingerichtet ist, eine Pflückwalzendrehzahl einer Pflückwalze wenigstens einer Pflückeinheit des Erntevorsatzgerätes in Abhängigkeit des mittels des Kornverlustsensors erfassten Kornverlustes einzustellen, insbesondere zu steuern und/oder zu regeln. Insbesondere bei wechselnden Feldbedingungen kann die Einstellung, insbesondere die Steuerung und/oder Regelung, der Pflückwalzendrehzahl eine Reduzierung des Kornverlustes erzielen. Die Pflückwalzendrehzahl einer Pflückwalze wenigstens einer Pflückeinheit des Erntevorsatzgerätes kann mittels eines Schaltgetriebes, insbesondere mit vier Gängen, und/oder mittels einer Vorrichtung zur stufenlosen Drehzahlanpassung, insbesondere einem Vorsatzvariator, eingestellt werden.

Das Erntevorsatzgerät weist mehrere Pflückeinheiten auf, wobei jede Pflückeinheit zwei Pflückwalzen, zwei Förderketten und eine Häckselvorrichtung ausweist. Die Steuer- und/oder Regeleinrichtung ist dazu vorgesehen und eingerichtet, die Pflückwalzendrehzahl aller Pflückwalzen aller Pflückeinheiten unabhängig von Drehzahlen anderer Komponenten des Erntevorsatzgerätes, insbesondere unabhängig von der Drehzahl der Förderketten und/oder unabhängig von der Drehzahl der Häckselvorrichtungen und/oder unabhängig von der Drehzahl der Querförderschnecke, einzustellen, insbesondere zu steuern und/oder zu regeln.

Die selbstfahrende landwirtschaftliche Arbeitsmaschine kann mehrere Kornverlustsensoren aufweisen, die unterschiedlichen Pflückeinheiten des Erntevorsatzgerätes zugeordnet sind. Hierbei kann es vorgesehen sein, dass Pflückwalzendrehzahlen der Pflückwalzen aller Pflückeinheiten des Erntevorsatzgerätes in Abhängigkeit des mittels der Kornverlustsensoren erfassten Kornverlustes einheitlich, insbesondere gesteuert und/oder geregelt, werden.

Die selbstfahrende landwirtschaftliche Arbeitsmaschine kann dazu vorgesehen und eingerichtet sein, in einer Kabine einem Fahrer der Arbeitsmaschine den mittels des Kornverlustsensors erfassten Kornverlust anzuzeigen, insbesondere visualisiert anzuzeigen, sodass dieser Fahrer mittels Bedienkomponenten der Arbeitsmaschine der Steuer- und/oder Regeleinrichtung eine optimale Pflückwalzendrehzahl vorgeben und/oder eingeben kann. Insbesondere kann dies eine Reduktion und/oder Absenkung der Pflückwalzendrehzahl umfassen. Alternativ oder zusätzlich kann vorgesehen sein, dass die Steuer- und/oder Regeleinrichtung eine optimale Pflückwalzendrehzahl automatisch, insbesondere unabhängig von dem Fahrer der selbstfahrenden landwirtschaftlichen Arbeitsmaschine, ermittelt und diese ermittelte Pflückwalzendrehzahl bezüglich wenigstens einer Pflückwalze wenigstens einer Pflückeinheit des Erntevorsatzgerätes einstellt, insbesondere steuert und/oder regelt.

Bei einer vorteilhaften Weiterbildung der erfindungsgemäßen Lösung ist vorgesehen, dass der Kornverlustsensor des Erntevorsatzgerätes derart im Erntevorsatzgerät angeordnet ist, dass Verlustkörner des Kornverlustes auf dem Kornverlustsensor aufprallen, und dass der Kornverlustsensor dazu vorgesehen und eingerichtet ist, in Abhängigkeit des Aufpralls der Verlustkörner den Kornverlust zu erfassen. Beim Aufprallen der Verlustkörner auf den Kornverlustsensor erzeugt der Aufprall eine mechanische Einwirkung auf den Kornverlustsensor, wobei der Kornverlustsensor dazu vorgesehen und eingerichtet ist, diese mechanische Einwirkung zu erfassen und in ein elektrisches Kornverlust-Signal, insbesondere für die Steuer- und/oder Regeleinrichtung, umzuwandeln.

Bei einer vorteilhaften Weiterbildung der erfindungsgemäßen Lösung ist vorgesehen, dass die selbstfahrende landwirtschaftliche Arbeitsmaschine und/oder das Erntevorsatzgerät wenigstens einen Feuchtigkeitssensor zur Erfassung einer Feuchtigkeit des vom tragenden Pflanzenteil abgetrennten Ernteguts aufweist, wobei die Steuer- und/oder Regeleinrichtung dazu vorgesehen und eingerichtet ist, die Pflückwalzendrehzahl aller Pflückwalzen aller Pflückeinheiten in Abhängigkeit des mittels des Kornverlustsensors erfassten Kornverlustes und der mittels des Feuchtigkeitssensors erfassten Feuchtigkeit des Erntegutes einzustellen, insbesondere derart einzustellen, dass bei feuchtem Erntegut eine höhere Pflückwalzendrehzahl eingestellt wird, während bei einem trockenem Erntegut eine niedrigere Pflückwalzendrehzahl, insbesondere im Vergleich zur höheren Pflückwalzendrehzahl, eingestellt wird.

Bei einer vorteilhaften Weiterbildung der erfindungsgemäßen Lösung ist vorgesehen, dass die Steuer- und/oder Regeleinrichtung dazu vorgesehen und eingerichtet ist, zur Reduzierung des mittels des Kornverlustsensors erfassten Kornverlustes die Pflückwalzendrehzahl einer Pflückwalze wenigstens einer Pflückeinheit des Erntevorsatzgerätes zu reduzieren. Hierfür kann die Steuer- und/oder Regeleinrichtung dazu vorgesehen und eingerichtet sein, in Abhängigkeit des mittels des Kornverlustsensors erfassten Kornverlustes eine optimale und/oder maximale Reduzierung der Pflückwalzendrehzahl einer Pflückwalze zu ermitteln und/oder vorzunehmen.

Bei einer vorteilhaften Weiterbildung der erfindungsgemäßen Lösung ist vorgesehen, dass der Kornverlustsensor des Erntevorsatzgerätes zwischen zwei Pflückeinheiten des Erntevorsatzgerätes angeordnet ist. Die Pflückwalzen einer Pflückeinheit weisen parallel zueinander ausgerichtete Pflückwalzendrehachsen auf, die insbesondere jeweils parallel zur Fahrtrichtung des Erntevorsatzgerätes ausgerichtet sind. Alle Pflückwalzen aller Pflückeinheit weisen parallel zueinander ausgerichtete Pflückwalzendrehachsen auf, die insbesondere jeweils parallel zur Fahrtrichtung des Erntevorsatzgerätes ausgerichtet sind. Eine Querachse bezüglich des Erntevorsatzgerätes ist quer und/oder senkrecht zur Fahrtrichtung des Erntevorsatzgerätes ausgerichtet. Die Fahrtrichtung des Erntevorsatzgerätes kann der Fahrtrichtung der selbstfahrenden landwirtschaftlichen Arbeitsmaschine entsprechen, wenn die selbstfahrende landwirtschaftliche Arbeitsmaschine sich in einer Geradeausfahrt befindet. Alternativ oder zusätzlich ist die Querachse bezüglich des Erntevorsitzgerätes quer und/oder senkrecht zur Pflückwalzendrehachse ausgerichtet. Ferner kann das Erntevorsatzgerät wenigstens eine Querförderschnecke aufweisen. Die Querförderschnecke kann eine Querförderschneckendrehachse aufweisen, die quer und/oder senkrecht zur Pflückwalzendrehachse ausgerichtet. Alternativ oder zusätzlich kann die Querförderschneckendrehachse quer und/oder senkrecht zur Fahrtrichtung des Erntevorsatzgerätes ausgerichtet sein. Alternativ oder zusätzlich kann die Querförderschneckendrehachse parallel zur Querachse ausgerichtet sein.

Der Kornverlustsensor des Erntevorsatzgerätes kann bezüglich der Querachse vollständig und/oder teilweise zwischen zwei Pflückeinheiten des Erntevorsatzgerätes angeordnet sein. Alternativ oder zusätzlich kann der Kornverlustsensor des Erntevorsatzgerätes bezüglich der Fahrtrichtung des Erntevorsatzgerätes vollständig vor der Querförderschnecke angeordnet sein.

Bei einer vorteilhaften Weiterbildung der erfindungsgemäßen Lösung ist vorgesehen, dass wenigstens eine Pflückeinheit wenigstens eine Förderkette zur Förderung des Ernteguts aufweist, die dazu vorgesehen und eingerichtet ist, Verlustkörner des Kornverlustes dem Kornverlustsensor zuzuführen. Falls keine Verlustkörner auftreten, geht das Erntegut vollständig zur Querförderschnecke und anschließend einem Förderer, insbesondere einem Schrägförderer, zugeführt. Falls jedoch doch Verlustkörner in einer Pflückeinheit des Erntevorsatzgerätes entstehen, ist die Förderkette dazu vorgesehen und eingerichtet, dass die Verlustkörner dem Kornverlustsensor zugeführt, insbesondere strömungstechnisch, zugeführt werden.

Bei einer vorteilhaften Weiterbildung der erfindungsgemäßen Lösung ist vorgesehen, dass jeder Förderkette jeweils ein Kornverlustsensor zugeordnet ist. Mit anderen Worten ausgedrückt, kann damit vorgesehen sein, dass zwischen zwei Pflückeinheiten des Erntevorsatzgerätes jeweils zwei Kornverlustsensoren des Erntevorsatzgerätes angeordnet sind. Ferner kann vorgesehen sein, dass zwischen diesen zwei Kornverlustsensoren zwischen zwei Pflückeinheiten des Erntevorsatzgerätes eine Trennwand ausgebildet ist. Die Trennwand kann derart ausgebildet sein, dass der Kornverlustsensor lediglich Kornverluste der Förderkette erhält, die ihm bezüglich der Querachse nächstliegend angeordnet ist. Hierdurch kann beispielsweise erzielt werden, dass die Kornverluste bezüglich jeder Förderkette ermittelt werden können und hierdurch eine separate Ansteuerung der Pflückeinheiten bezüglich der Pflückwalzendrehzahl erzielt wird.

Bei einer vorteilhaften Weiterbildung der erfindungsgemäßen Lösung ist vorgesehen, dass der Kornverlustsensor eine Prallplatte zur Erfassung des Kornverlustes aufweist. Die Prallplatte kann derart im Erntevorsatzgerät angeordnet sein, dass Verlustkörner des Kornverlustes vor einem Verlassen des Erntevorsatzgerätes auf die Prallplatte mit einer Aufprallkraft einwirken. Hierdurch wird ermöglicht, genau den durch das Erntevorsatzgerät hervorgerufenen Kornverlust unabhängig von Umgebungseinflüssen des Erntevorsatzgerät zu ermitteln.

Bei einer vorteilhaften Weiterbildung der erfindungsgemäßen Lösung ist vorgesehen, dass der Kornverlustsensor eine Prallplattenwaage ausbildet, und/oder dass der Kornverlustsensor einen piezoelektrischen Sensor aufweist, und/oder dass der Kornverlustsensor einen kapazitiven Sensor aufweist, und/oder dass der Kornverlustsensor einen induktiven Sensor aufweist. Insbesondere kann eine Prallplatte des Kornverlustsensors wenigstens einen piezoelektrischen Sensor, und/oder wenigstens einen kapazitiven Sensor, und/oder wenigstens einen induktiven Sensor aufweisen.

Bei einer vorteilhaften Weiterbildung der erfindungsgemäßen Lösung ist vorgesehen, dass der Kornverlustsensor eine Prallplatte aufweist, die dazu vorgesehen und eingerichtet ist, Aufprallenergie von Verlustkörnern des Kornverlustes mittels einer mechanischen Veränderung und/oder mechanischen Auslenkung der Prallplatte zu erfassen, wobei der Kornverlustsensor dazu vorgesehen und eingerichtet ist, mittels der mechanischen Veränderung und/oder mechanischen Auslenkung der Prallplatte den Kornverlust zu ermitteln.

Ferner betrifft die Erfindung das Erntevorsatzgerät für eine selbstfahrende landwirtschaftliche Arbeitsmaschine. Hierbei kann dieses Erntevorsatzgerät wenigstens ein und/oder mehrere der zuvor genannten als auch der nachfolgend genannten Merkmale bezüglich des Erntevorsatzgerät aufweisen. Das erfindungsgemäße Erntevorsatzgerät zur Ernte von in Pflanzenreihen ausgebildetem Erntegut für eine selbstfahrende landwirtschaftliche Arbeitsmaschine weist mehrere Pflückeinheiten auf, wobei jede Pflückeinheit wenigstens zwei Pflückwalzen zur Trennung des Ernteguts von dem diesen tragenden Pflanzenteil aufweist, wobei wenigstens ein Kornverlustsensor des Erntevorsatzgerätes zwischen zwei Pflückeinheiten des Erntevorsatzgerätes angeordnet ist.

Bei einer vorteilhaften Weiterbildung der erfindungsgemäßen Lösung ist vorgesehen, dass wenigstens eine Pflückeinheit wenigstens eine Förderkette zur Förderung des Ernteguts aufweist, die dazu vorgesehen und eingerichtet ist, Verlustkörner des Kornverlustes dem Kornverlustsensor zuzuführen, und/oder dass jeder Förderkette jeweils ein Kornverlustsensor zugeordnet ist.

Bei einer vorteilhaften Weiterbildung der erfindungsgemäßen Lösung ist vorgesehen, dass der Kornverlustsensor des Erntevorsatzgerätes derart im Erntevorsatzgerät angeordnet ist, dass Verlustkörner des Kornverlustes auf dem Kornverlustsensor aufprallen, und dass der Kornverlustsensor dazu vorgesehen und eingerichtet ist, in Abhängigkeit des Aufpralls der Verlustkörner den Kornverlust zu erfassen.

Bei einer vorteilhaften Weiterbildung der erfindungsgemäßen Lösung ist vorgesehen, dass der Kornverlustsensor eine Prallplatte zur Erfassung des Kornverlustes aufweist.

Bei einer vorteilhaften Weiterbildung der erfindungsgemäßen Lösung ist vorgesehen, dass der Kornverlustsensor eine Prallplattenwaage ausbildet, und/oder dass der Kornverlustsensor einen piezoelektrischen Sensor aufweist, und/oder dass der Kornverlustsensor einen kapazitiven Sensor aufweist, und/oder dass der Kornverlustsensor einen induktiven Sensor aufweist.

Bei einer vorteilhaften Weiterbildung der erfindungsgemäßen Lösung ist vorgesehen, dass das Erntevorsatzgerät eine Steuer- und/oder Regeleinrichtung aufweist, die dazu vorgesehen und eingerichtet ist, eine Pflückwalzendrehzahl einer Pflückwalze wenigstens einer Pflückeinheit in Abhängigkeit des mittels des Kornverlustsensors erfassten Kornverlustes einzustellen, insbesondere zu steuern und/oder zu regeln.

Bei einer vorteilhaften Weiterbildung der erfindungsgemäßen Lösung ist vorgesehen, dass die Steuer- und/oder Regeleinrichtung dazu vorgesehen und eingerichtet ist, insbesondere in Abhängigkeit der Pflückwalzendrehzahl der Pflückwalzen des Erntevorsatzgerätes den Nichtkornanteil und/oder den NKB (MOG) Anteil zu ermitteln. Diese Ermittlung kann über eine Messung mittels Sensoren zur Erfassung des Nichtkornanteils erfolgen. Alternativ oder zusätzlich kann die Steuer- und/oder Regeleinrichtung einen Datensatz umfassen, in dem Messdaten bezüglich des Nichtkornanteils, insbesondere in Abhängigkeit der der Pflückwalzendrehzahl und/oder der Pflanzenart, hinterlegt sind, sodass die Steuer- und/oder Regeleinrichtung mittels dieses Datensatzes in Abhängigkeit der Pflückwalzendrehzahl der Pflückwalzen des Erntevorsatzgerätes den Nichtkornanteil ermitteln kann. Die Steuer- und/oder Regeleinrichtung kann dazu vorgesehen und eingerichtet sein, dass ein Fahrer der selbstfahrenden landwirtschaftlichen Arbeitsmaschine die Pflückwalzendrehzahl der Pflückwalzen des Erntevorsatzgerätes vorgeben kann, wobei die Steuer- und/oder Regeleinrichtung Informationen über ein zukünftigen Nichtkornanteil in Abhängigkeit der Pflückwalzendrehzahl dem Fahrer der selbstfahrenden landwirtschaftlichen Arbeitsmaschine, insbesondere mittels einem Displaysignal, darlegen kann. Es kann vorgesehen sein, dass der Fahrer der selbstfahrenden landwirtschaftlichen Arbeitsmaschine mittels einer eingestellten Strategie ein Ziel definiert und dementsprechend die Pflückwalzendrehzahl mittels der Steuer- und/oder Regeleinrichtung angesteuert und/oder geregelt wird.

Weitere wichtige Merkmale und Vorteile der Erfindung ergeben sich aus den Unter-ansprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine erfindungsgemäße selbstfahrende landwirtschaftliche Arbeitsmaschine mit einem Erntevorsatzgerät in einer Draufsicht,
- Fig. 2: das erfindungsgemäße Erntevorsatzgerät in einer perspektivischen Draufsicht,
- Fig. 3: einen Teilabschnitt der Fig. 2 in einer perspektivischen Unterseitenansicht, und
- Fig. 4: einen schematischen Aufbau bezüglich der Steuerung und/oder Regelung des Erntevorsatzgerätes.

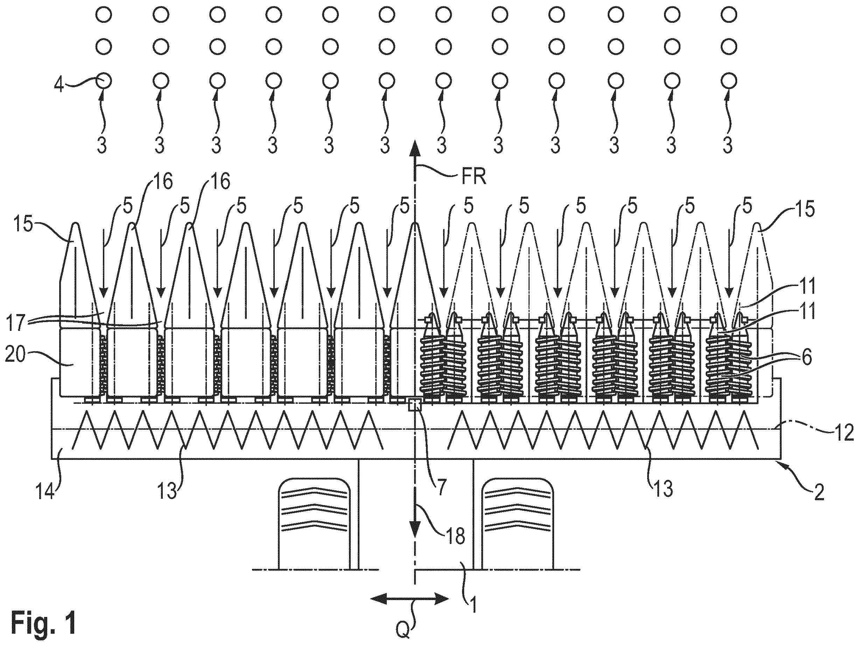

Die Fig. 1 zeigt eine Draufsicht auf eine vorschlagsgemäße selbstfahrende landwirtschaftliche Arbeitsmaschine 1, bei der es sich hier beispielhaft um einen selbstfahrenden Mähdrescher handelt. Die selbstfahrende landwirtschaftliche Arbeitsmaschine 1 weist ein Erntevorsatzgerät 2 zur Ernte von Erntegut 4 auf, wobei das Erntegut 4 in mehreren voneinander beabstandeten Pflanzenreihen 3 ausgebildet und angeordnet ist. Ein solches in Pflanzenreihen 3 ausgebildetes Erntegut 4 kann beispielsweise Mais sein. Das Erntevorsatzgerät 2 ist bezüglich der Fahrtrichtung **FR** der selbstfahrenden landwirtschaftlichen Arbeitsmaschine 1 vorne an einem Schrägförderer 18 der selbstfahrenden landwirtschaftlichen Arbeitsmaschine 1, insbesondere lösbar, angeordnet. Dieses Erntevorsatzgerät 2 dient dem Abtrennen und Aufnehmen des Ernteguts 4, wobei das abgetrennte und abgenommene Erntegut 4 zur weiteren Verarbeitung mehreren weiteren, jedoch nicht dargestellten, Arbeitsorganen der selbstfahrenden landwirtschaftlichen Arbeitsmaschine 1 über den Schrägförderer 18 zugeführt wird.

Das Erntevorsatzgerät 2 weist mehrere Halmteiler 15 und 16 auf, wobei die Halmteiler 16 und/oder 15 einen Einzugsbereich des Erntevorsatzgerätes 2 in mehrere Einzugsbereiche 17 unterteilt. Zwischen jeweils zwei benachbarten Halmteiler 16 und/oder 15 ist entgegen einer Fahrtrichtung **FR** nachfolgend jeweils eine Pflückeinheit 5 des Erntevorsatzgerätes 1 angeordnet. Jede dieser Pflückeinheiten 5 weist jeweils zwei Abdeckungen 20, insbesondere zwei Gehäuseabdeckungen, auf und ist mit diesen wenigstens teilweise abgedeckt. Während in der Fig. 1 linksseitig von der Fahrtrichtung **FR** betrachtet diese Abdeckungen 20 dargestellt sind, sind die Pflückeinheiten 5 rechtsseitig der Fahrtrichtung **FR** derart halbtransparent dargestellt, als ob die Abdeckungen 20 nicht vorhanden wären.

Jede Pflückeinheit 5 des Erntevorsatzgerätes 1 weist wenigstens zwei Pflückwalzen 6 auf und ist zur Trennung des Ernteguts 4 von dem dieses Erntegut tragenden Pflanzenteil, insbesondere dem Halm, ausgebildet. Die Grundkörper dieser Pflückwalzen 6 können als Gewindespindeln, insbesondere mit Gewindegängen und/oder mit einem zylindrischen Grundkörper, ausgebildet sein.

Eine erste Pflückwalze 6 einer Pflückeinheit 5 ist unter einer ersten Abdeckung 20 angeordnet, während eine zweite Pflückwalze 6 dieser Pflückeinheit 5 unter einer zweiten Abdeckung 20 angeordnet ist. Die Pflückwalzen 6 einer Pflückeinheit 5 bilden gegenläufig angetriebene Pflückwalzen 6 aus, um die Trennung des Ernteguts 4 von dem dieses tragenden Pflanzenteil zu ermöglichen.

Die Pflückwalzen 6 einer Pflückeinheit 5 weisen parallel zueinander ausgerichtete Pflückwalzendrehachsen 11 auf, die insbesondere jeweils parallel zur Fahrtrichtung F des Erntevorsatzgerätes 2 ausgerichtet sind. Insbesondere können alle Pflückwalzen 6 aller Pflückeinheiten 5 parallel zueinander ausgerichtete Pflückwalzendrehachsen 11 aufweisen, die insbesondere jeweils parallel zur Fahrtrichtung F des Erntevorsatzgerätes 2 ausgerichtet sind. Eine Querachse Q bezüglich des Erntevorsatzgerätes 2 ist quer und/oder senkrecht zur Fahrtrichtung F des Erntevorsatzgerätes 2 ausgerichtet. Die Fahrtrichtung F des Erntevorsatzgerätes kann der Fahrtrichtung der selbstfahrenden landwirtschaftlichen Arbeitsmaschine 1 entsprechen, wenn die selbstfahrende landwirtschaftliche Arbeitsmaschine 1 sich in einer Geradeausfahrt befindet. Alternativ oder zusätzlich ist die Querachse Q bezüglich des Erntevorsitzgerätes quer und/oder senkrecht zur Pflückwalzendrehachse 11 ausgerichtet. Die Querachse Q kann bezüglich der Fahrtrichtung F, insbesondere entlang der Fahrtrichtung F oder entgegengesetzt der Fahrtrichtung F, verschoben ausgerichtet sein.

Ferner kann das Erntevorsatzgerät 2 wenigstens eine Querförderschnecke 13 aufweisen. Die Querförderschnecke 13 kann eine Querförderschneckendrehachse 12 aufweisen, die quer und/oder senkrecht zur Pflückwalzendrehachse 11 ausgerichtet ist. Alternativ oder zusätzlich kann die Querförderschneckendrehachse 12 quer und/oder senkrecht zur Fahrtrichtung F des Erntevorsatzgerätes 2 ausgerichtet sein. Alternativ oder zusätzlich kann die Querförderschneckendrehachse 12 parallel zur Querachse Q ausgerichtet sein. Die Querförderschnecke 13 und/oder die Pflückeinheiten 5 können wenigstens teilweise an einem Maschinenrahmen 14 des Erntevorsatzgerätes 2 angeordnet sein.

Das Erntevorsatzgerät 2 weist gemäß Figur 1 wenigstens einen Kornverlustsensor 7 zur Erfassung eines Kornverlustes des vom tragenden Pflanzenteil abgetrennten Ernteguts 4 auf. Der Kornverlustsensor 7 des Erntevorsatzgerätes 2 ist bezüglich der Querachse Q wenigstens teilweise zwischen zwei Pflückeinheiten 5 des Erntevorsatzgerätes 2 angeordnet. Aus Vereinfachungsgründen ist in Figur 1 exemplarisch nur ein einziger Kornverlustsensor 7 dargestellt, es liegt jedoch im Rahmen der Erfindung, dass jeweils zwischen benachbarten Pflückeinheiten 5 ein Kornverlustsensor 7 positioniert ist, sodass das Erntevorsatzgerät 2 eine Vielzahl von Kornverlustsensoren 7 aufnimmt. Der Kornverlustsensor 7 des Erntevorsatzgerätes 2 ist derart im Erntevorsatzgerät 2 angeordnet, dass Verlustkörner des Kornverlustes auf dem Kornverlustsensor 7 aufprallen, wobei der Kornverlustsensor 7 dazu vorgesehen und eingerichtet ist, in Abhängigkeit des Aufpralls der Verlustkörner den Kornverlust zu erfassen. Hierfür ist der Kornverlustsensor 7 des Erntevorsatzgerätes 2 zwischen zwei, insbesondere zwischen zwei unmittelbar benachbarten, Pflückeinheiten 5 des Erntevorsatzgerätes 2 angeordnet. Zusätzlich ist der Kornverlustsensor 7 des Erntevorsatzgerätes 2 bezüglich der Fahrtrichtung F des Erntevorsatzgerätes 2, insbesondere vollständig, vor der Querförderschnecke 13 angeordnet. Obwohl es in den Figuren nicht gezeigt ist, kann mehreren Pflückeinheiten 5 jeweils ein Kornverlustsensor 7 zugeordnet sein.

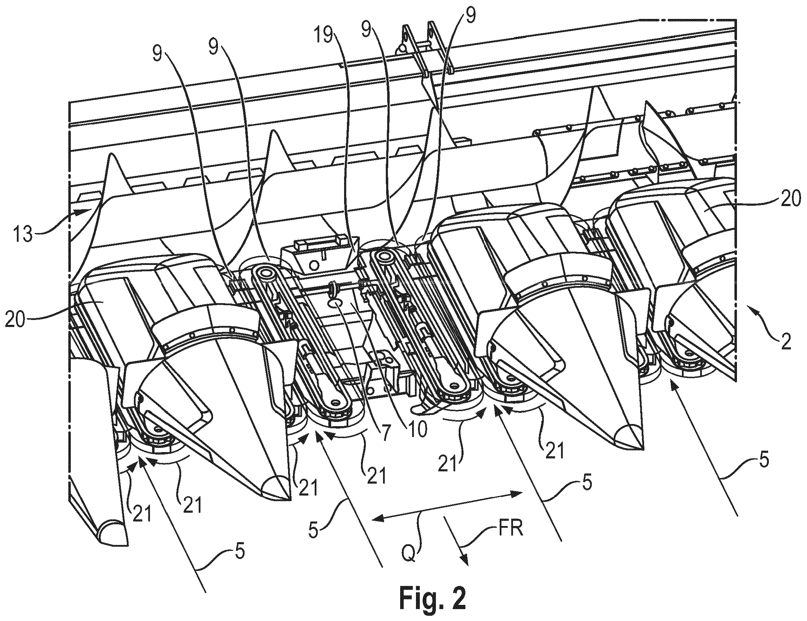

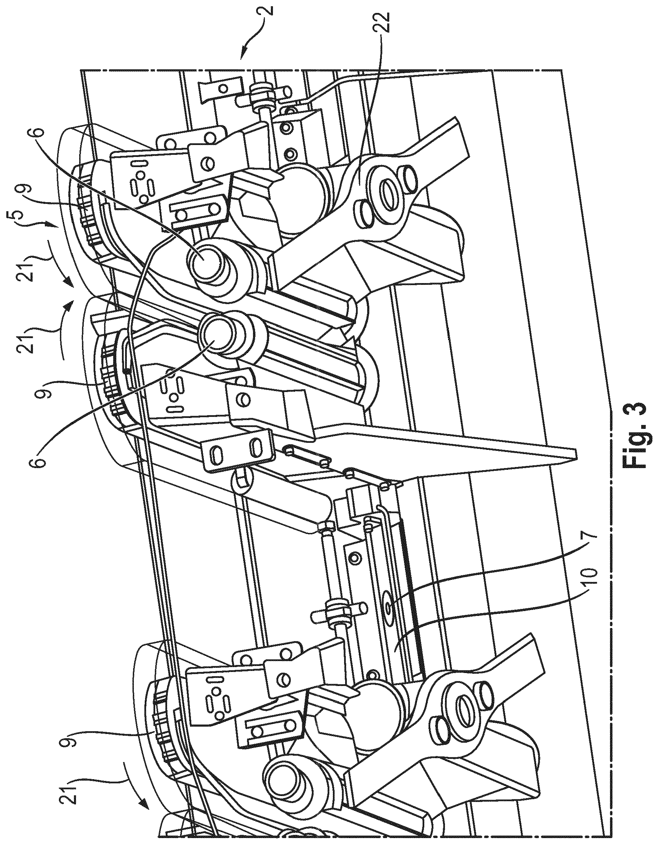

Wie in der Fig. 2 angedeutet weist jede Pflückeinheit 5 wenigstens zwei Förderketten 9 zur Förderung des Ernteguts 4 auf. Diese Förderketten 9 sind oberhalb der Pflückwalzen 6 und unterhalb der Abdeckungen 20 angeordnet. Gemäß der Fig. 3 und erfindungsgemäß weist jede Pflückeinheit 5 wenigstens eine Häckselvorrichtung 22 auf, die im Ausführungsbeispiel unterhalb der Pflückwalzen 6 angeordnet ist. Am Beispiel von Mais als Erntegut 4 werden im Einzugsbereich Maisstängel dabei mittels der Pflückwalzen 6 durch einen Pflückspalt in Richtung Erdboden gezogen, wobei das Erntegut 4 in Form des Fruchtstandes an den Förderketten 9 vom Maisstängel abgetrennt und der Maisstängel mittels der Häckselvorrichtung 22 zerhäckselt wird. Die Förderketten 9 sind zusätzlich dazu vorgesehen, Verlustkörner des Kornverlustes dem Kornverlustsensor 7 zuzuführen.

Wie in den Fig. 2 und 3 angedeutet kann der Kornverlustsensor 7 eine Prallplatte 10 zur Erfassung des Kornverlustes aufweisen. Die Prallplatte 10 kann dazu vorgesehen und eingerichtet sein, Aufprallenergie von Verlustkörnern des Kornverlustes mittels einer mechanischen Veränderung und/oder mechanischen Auslenkung der Prallplatte 10 zu erfassen, wobei der Kornverlustsensor 7 dazu vorgesehen und eingerichtet ist, mittels der mechanischen Veränderung und/oder mechanischen Auslenkung der Prallplatte 10 den Kornverlust zu ermitteln. Ferner oder zusätzlich kann der Kornverlustsensor 7 eine Prallplattenwaage ausbilden, und/oder einen piezoelektrischen Sensor, und/oder einen kapazitiven Sensor, und/oder einen induktiven Sensor ausbilden. Der Kornverlustsensor 7 kann neben einer Prallplatte 10 auch eine Umlenkplatte 19 aufweisen, um Verlustkörner des Kornverlustes ausgehend von der jeweiligen Förderkette 9 zur Prallplatte 10 zu führen. Die Förderketten 9 können sich entlang der angedeuteten Bewegungsrichtungen 21 bewegen.

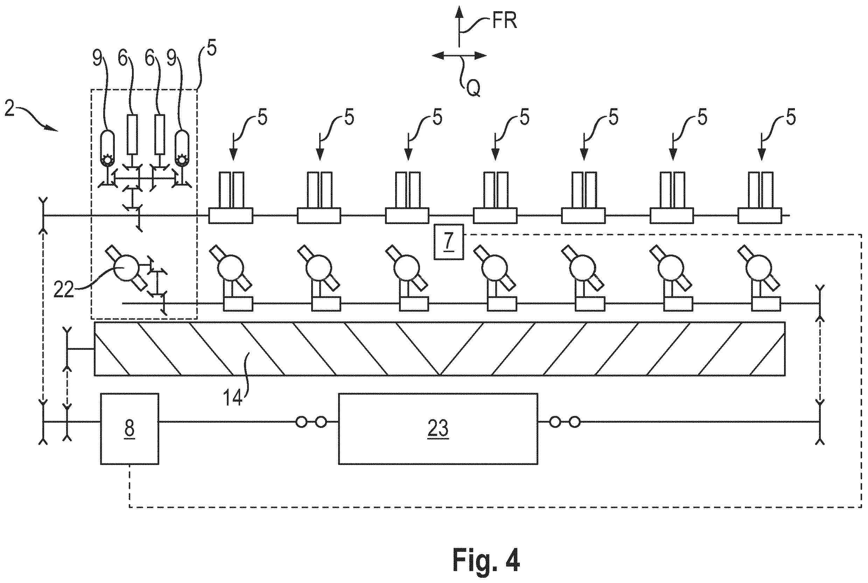

Die Fig. 4 zeigt einen schematischen Aufbau bezüglich der Steuerung und/oder Regelung des Erntevorsatzgerätes 2. Die selbstfahrende landwirtschaftliche Arbeitsmaschine 1 umfasst eine Steuer- und/oder Regeleinrichtung 8, die dazu vorgesehen und eingerichtet ist, eine Pflückwalzendrehzahl einer Pflückwalze 6 wenigstens einer Pflückeinheit 5 des Erntevorsatzgerätes 2 in Abhängigkeit des mittels des oder der Kornverlustsensoren 7 erfassten Kornverluste einzustellen, sodass die mittels des oder der Kornverlustsensoren 7 erfassten Kornverluste reduziert werden, wobei in Figur 4 aus Vereinfachungsgründen wieder nur ein Kornverlustsensor 7 dargestellt ist. Die Steuer- und/oder Regeleinrichtung 8 kann auch ein Teil des Erntevorsatzgerätes 2 sein, wie es beispielhaft in der Fig. 4 angedeutet ist. Alternativ kann die Steuer- und/oder Regeleinrichtung 8 von dem Erntevorsatzgerät 2 beabstandet und an einer anderen Position in der selbstfahrenden landwirtschaftlichen Arbeitsmaschine 1 angeordnet sein.

Die Steuer- und/oder Regeleinrichtung 8 kann dazu vorgesehen und eingerichtet sein, die Pflückwalzendrehzahl aller Pflückwalzen 6 aller Pflückeinheiten 5 des Erntevorsatzgerätes 2, insbesondere gleichzeitig, zu steuern und/oder zu regeln. Ferner kann die Steuer- und/oder Regeleinrichtung 8 dazu vorgesehen und eingerichtet sein, alle Pflückwalzen 6 aller Pflückeinheiten 5 des Erntevorsatzgerätes 2 mit einer einheitlichen Pflückwalzendrehzahl, insbesondere gleichzeitig, zu steuern und/oder zu regeln.

Die Steuer- und/oder Regeleinrichtung 8 kann eine Getriebekomponente zur Drehzahlsteuerung und/oder Drehzahlregelung der Pflückwalzendrehzahl der Pflückwalzen 6 aufweisen. Wie in der Fig. 4 dargestellt, kann das Erntevorsatzgerät 2 über eine Antriebskopplung 23 von der selbstfahrenden landwirtschaftlichen Arbeitsmaschine 1 mit Antriebsenergie versorgt werden, wobei die Getriebekomponente der Steuer- und/oder Regeleinrichtung 8 zwischen der Antriebskopplung 23 und den Pflückwalzen 6, insbesondere bezüglich der Drehkraftübertragung, ausgebildet und/oder positioniert ist.

In der Fig. 4 ist die Steuer- und/oder Regeleinrichtung 8 dazu vorgesehen und eingerichtet, die Pflückwalzendrehzahl aller Pflückwalzen 6 aller Pflückeinheiten 5 unabhängig von der Drehzahl der Häckselvorrichtungen 22 zu steuern und/oder zu regeln. Alternativ oder zusätzlich kann die Steuer- und/oder Regeleinrichtung 8 dazu vorgesehen und eingerichtet sein, die Pflückwalzendrehzahl aller Pflückwalzen 6 aller Pflückeinheiten 5 gleichzeitig und unabhängig von Drehzahlen anderer Komponenten des Erntevorsatzgerätes, insbesondere unabhängig von der Drehzahl der Förderketten 9 und/oder unabhängig von der Drehzahl der Häckselvorrichtungen 22 und/oder unabhängig von der Drehzahl der Querförderschnecke 14, einzustellen, insbesondere zu steuern und/oder zu regeln.

Ferner kann die Steuer- und/oder Regeleinrichtung 8 dazu vorgesehen und eingerichtet sein, die Pflückwalzendrehzahl aller Pflückwalzen 6 aller Pflückeinheiten 5 des Erntevorsatzgerätes 2 zu reduzieren, insbesondere linear zu reduzieren, um eine Reduzierung des mittels des Kornverlustsensors 7 erfassten Kornverlustes zu erzielen.

Die selbstfahrende landwirtschaftliche Arbeitsmaschine 1 und/oder das Erntevorsatzgerät 2 kann einen in den Figuren nicht dargestellten Feuchtigkeitssensor zur Messung der Feuchtigkeit des Erntegutes aufweisen. Die Steuer- und/oder Regeleinrichtung 8 kann dazu vorgesehen und eingerichtet sein, die Pflückwalzendrehzahl aller Pflückwalzen 6 aller Pflückeinheiten 5 in Abhängigkeit des mittels des Kornverlustsensors 7 erfassten Kornverlustes und der mittels des Feuchtigkeitssensors erfassten Feuchtigkeit des Erntegutes einzustellen, insbesondere zu steuern und/oder zu regeln. Hierbei kann es vorgesehen sein, dass bei feuchtem Erntegut eine höhere Pflückwalzendrehzahl eingestellt wird, während bei einem trockenem Erntegut eine niedrigere Pflückwalzendrehzahl, insbesondere im Vergleich zur höheren Pflückwalzendrehzahl, eingestellt wird. Mit anderen Worten ausgedrückt, wird mit zunehmender Feuchtigkeit des Erntegutes die Pflückwalzendrehzahl erhöht bzw. bei abnehmender Feuchtigkeit des Erntegutes die Pflückwalzendrehzahl verringert.

### Bezugszeichenliste

- 1: Selbstfahrende landwirtschaftliche Arbeitsmaschine
- 2: Erntevorsatzgerät
- 3: Pflanzenreihen
- 4: Erntegut
- 5: Pflückeinheit
- 6: Pflückwalzen
- 7: Kornverlustsensor
- 8: Steuer- und/oder Regeleinrichtung
- 9: Förderkette
- 10: Prallplatte
- 11: Pflückwalzendrehachse
- 12: Querförderschneckendrehachse
- 13: Querförderschnecke
- 14: Maschinenrahmen
- 15: Äußere Halmteiler
- 16: Halmteiler
- 17: Einzugsbereich
- 18: Förderer
- 19: Umlenkplatte
- 20: Abdeckung
- 21: Bewegungsrichtung
- 22: Häckselvorrichtung
- 23: Antriebskopplung
- FR: Fahrtrichtung
- Q: Querachse

## Patentansprüche

1. Erntevorsatzgerät (2) oder mit einem Erntevorsatzgerät (2) versehene selbstfahrende landwirtschaftliche Arbeitsmaschine (1),
- wobei das Erntevorsatzgerät (2) zur Ernte von in Pflanzenreihen (3) ausgebildetem Erntegut (4) mehrere Pflückeinheiten (5) aufweist und jede Pflückeinheit (5)
- zwei Pflückwalzen (6) zur Trennung des Ernteguts (4) von einem das Erntegut (4) tragenden Pflanzenteil,
- zwei Förderketten (9) zur Förderung des Ernteguts (4) und
- eine Häckselvorrichtung (22)
aufweist,
- wobei das Erntevorsatzgerät (2) wenigstens einen Kornverlustsensor (7) zur Erfassung eines Kornverlustes von Verlustkörnern des vom tragenden Pflanzenteil abgetrennten Ernteguts (4) aufweist,
- wobei das Erntevorsatzgerät (2) oder die selbstfahrende landwirtschaftliche Arbeitsmaschine (1) eine Steuer- und/oder Regeleinrichtung (8) aufweist, die dazu vorgesehen und eingerichtet ist, eine Pflückwalzendrehzahl aller Pflückwalzen (6) aller Pflückeinheiten (5) des Erntevorsatzgerätes (2)
- in Abhängigkeit des mittels des Kornverlustsensors (7) erfassten Kornverlustes, aber
- unabhängig von Drehzahlen anderer Komponenten des Erntevorsatzgerätes (2) und insbesondere
- unabhängig von der Drehzahl der Förderketten (9) einzustellen, zu steuern und/oder zu regeln.

2. Erntevorsatzgerät (2) oder damit versehene selbstfahrende landwirtschaftliche Arbeitsmaschine (1) nach Anspruch 1,
**dadurch gekennzeichnet,**
- **dass** der Kornverlustsensor (7) des Erntevorsatzgerätes (2) derart im Erntevorsatzgerät (2) angeordnet ist, dass die Verlustkörner des Kornverlustes auf dem Kornverlustsensor (7) aufprallen, und
- **dass** der Kornverlustsensor (7) dazu vorgesehen und eingerichtet ist, in Abhängigkeit des Aufpralls der Verlustkörner den Kornverlust zu erfassen.

3. Erntevorsatzgerät (2) oder damit versehene selbstfahrende landwirtschaftliche Arbeitsmaschine (1) nach einem der vorhergehenden Ansprüche,
**dadurch gekennzeichnet,**
**dass** die Steuer- und/oder Regeleinrichtung (8) dazu vorgesehen und eingerichtet ist, zur Reduzierung des mittels des Kornverlustsensors (7) erfassten Kornverlustes die Pflückwalzendrehzahl einer Pflückwalze (6) wenigstens einer Pflückeinheit (5) des Erntevorsatzgerätes (2) zu reduzieren.

4. Erntevorsatzgerät (2) oder damit versehene selbstfahrende landwirtschaftliche Arbeitsmaschine (1) nach einem der vorhergehenden Ansprüche,
**dadurch gekennzeichnet,**
**dass** die selbstfahrende landwirtschaftliche Arbeitsmaschine (1) und/oder das Erntevorsatzgerät (2) wenigstens einen Feuchtigkeitssensor zur Erfassung einer Feuchtigkeit des vom tragenden Pflanzenteil abgetrennten Ernteguts (4) aufweist,
wobei die Steuer- und/oder Regeleinrichtung (8) dazu vorgesehen und eingerichtet ist, die Pflückwalzendrehzahl aller Pflückwalzen (6) aller Pflückeinheiten (5) in Abhängigkeit
- des mittels des Kornverlustsensors (7) erfassten Kornverlustes und
- der mittels des Feuchtigkeitssensors erfassten Feuchtigkeit des Erntegutes einzustellen, insbesondere derart einzustellen,
- **dass** bei feuchtem Erntegut eine höhere Pflückwalzendrehzahl eingestellt wird,
- während bei einem trockenem Erntegut eine niedrigere Pflückwalzendrehzahl, insbesondere eine im Vergleich zur höheren Pflückwalzendrehzahl niedrigere Pflückwalzendrehzahl eingestellt wird.

5. Erntevorsatzgerät (2) oder damit versehene selbstfahrende landwirtschaftliche Arbeitsmaschine (1) nach einem der vorhergehenden Ansprüche,
**dadurch gekennzeichnet,**
**dass** der Kornverlustsensor (7) des Erntevorsatzgerätes (2) zwischen zwei Pflückeinheiten (5) des Erntevorsatzgerätes (2) angeordnet ist.

6. Erntevorsatzgerät (2) oder damit versehene selbstfahrende landwirtschaftliche Arbeitsmaschine (1) nach einem der vorhergehenden Ansprüche,
**dadurch gekennzeichnet,**
**dass** die Förderketten (9) dazu vorgesehen und eingerichtet ist, die Verlustkörner des Kornverlustes dem Kornverlustsensor (7) zuzuführen.

7. Erntevorsatzgerät (2) oder damit versehene selbstfahrende landwirtschaftliche Arbeitsmaschine (1) nach einem der vorhergehenden Ansprüche,
**dadurch gekennzeichnet,**
**dass** der Kornverlustsensor (7)
- eine Prallplatte (10) zur Erfassung des Kornverlustes
- und vorzugsweise zusätzlich eine Umlenkplatte (19) zum Führen der Verlustkörner des Kornverlusts, ausgehend von der jeweiligen Förderkette (9) zur Prallplatte (10) aufweist.

8. Erntevorsatzgerät (2) oder damit versehene selbstfahrende landwirtschaftliche Arbeitsmaschine (1) nach einem der vorhergehenden Ansprüche,
**dadurch gekennzeichnet,**
**dass** der Kornverlustsensor (7)
- eine Prallplattenwaage ausbildet,
- einen piezoelektrischen Sensor aufweist,
- einen kapazitiven Sensor aufweist und/oder
- einen induktiven Sensor aufweist.

9. Erntevorsatzgerät (2) oder damit versehene selbstfahrende landwirtschaftliche Arbeitsmaschine (1) nach einem der vorhergehenden Ansprüche,
**dadurch gekennzeichnet,**
- **dass** der Kornverlustsensor (7) eine Prallplatte (10) aufweist, die dazu vorgesehen und eingerichtet ist, Aufprallenergie der Verlustkörner des Kornverlustes mittels einer mechanischen Veränderung und/oder mechanischen Auslenkung der Prallplatte (10) zu erfassen,
- wobei der Kornverlustsensor (7) dazu vorgesehen und eingerichtet ist, mittels der mechanischen Veränderung und/oder mechanischen Auslenkung der Prallplatte (10) den Kornverlust zu ermitteln.

10. Erntevorsatzgerät (2) oder damit versehene selbstfahrende landwirtschaftliche Arbeitsmaschine (1) nach einem der vorhergehenden Ansprüche,
**dadurch gekennzeichnet,**
- **dass** jeder Förderkette (9) jeweils ein Kornverlustsensor (7) zugeordnet ist, und/oder
- **dass** das Erntevorsatzgerät (2) wenigstens einen Feuchtigkeitssensor (7) zur Erfassung einer Feuchtigkeit des vom tragenden Pflanzenteil abgetrennten Ernteguts (4) aufweist.

11. Erntevorsatzgerät (2) oder damit versehene selbstfahrende landwirtschaftliche Arbeitsmaschine (1) nach einem der vorhergehenden Ansprüche,
**dadurch gekennzeichnet,**
- **dass** der Kornverlustsensor (7) des Erntevorsatzgerätes (2) derart im Erntevorsatzgerät (2) angeordnet ist, dass die Verlustkörner des Kornverlustes auf den Kornverlustsensor (7) aufprallen.

## Claims

1. Harvesting attachment (2) or self-propelled agricultural working machine (1) provided with a harvesting attachment (2),
- wherein the harvesting attachment (2) has multiple picking units (5) for harvesting a crop (4) formed in rows of plants (3) and each picking unit (5) has
- two picking rollers (6) for separating the crop (4) from a part of the plant bearing the crop (4),
- two conveying chains (9) for conveying the crop (4) and
- a chopping device (22),
- wherein the harvesting attachment (2) has at least one grain loss sensor (7) for detecting a grain loss of the lost grains of the crop detached from the bearing part of the plant (4),
- wherein the harvesting attachment (2) or the self-propelled agricultural working machine (1) has an open-loop and/or closed-loop control device (8) which is intended and designed to set, control on an open-loop basis and/or control on a closed-loop basis a picking roller speed of all the picking rollers (6) of all the picking units (5) of the harvesting attachment (2)
- in dependence on the grain loss detected by means of the grain loss sensor (7), but
- independently of the speeds of other components of the harvesting attachment (2) and in particular
- independently of the speed of the conveying chains (9).

2. Harvesting attachment (2) or self-propelled agricultural working machine (1) provided therewith according to Claim 1,
**characterized**
- **in that** the grain loss sensor (7) of the harvesting attachment (2) is arranged in the harvesting attachment (2) in such a way that the lost grains of the grain loss impact on the grain loss sensor (7), and
- **in that** the grain loss sensor (7) is intended and designed to detect the grain loss in dependence on the impact of the lost grains of the grain loss.

3. Harvesting attachment (2) or self-propelled agricultural working machine (1) provided therewith according to one of the preceding claims,
**characterized**
**in that** the open-loop and/or closed-loop control device (8) is intended and designed to reduce the picking roller speed of a picking roller (6) of at least one picking unit (5) of the harvesting attachment (2) to reduce the grain loss detected by means of the grain loss sensor (7).

4. Harvesting attachment (2) or self-propelled agricultural working machine (1) provided therewith according to one of the preceding claims,
**characterized**
**in that** the self-propelled agricultural working machine (1) and/or the harvesting attachment (2) has at least one moisture sensor for detecting a moisture content of the crop detached from the bearing part of the plant (4),
wherein the open-loop and/or closed-loop control device (8) is intended and designed for setting the picking roller speed of all the picking rollers (6) of all the picking units (5) in dependence on
- the grain loss detected by means of the grain loss sensor (7) and
- the moisture content of the crop detected by means of the moisture sensor, in particular setting them in such a way
- that a higher picking roller speed is set in the case of wet crops,
- while a lower picking roller speed is set in the case of dry crops, in particular a lower picking roller speed in comparison with the higher picking roller speed.

5. Harvesting attachment (2) or self-propelled agricultural working machine (1) provided therewith according to one of the preceding claims,
**characterized**
**in that** the grain loss sensor (7) of the harvesting attachment (2) is arranged between two picking units (5) of the harvesting attachment (2).

6. Harvesting attachment (2) or self-propelled agricultural working machine (1) provided therewith according to one of the preceding claims,
**characterized**
**in that** the conveying chains (9) are intended and designed to feed the lost grains of the grain loss to the grain loss sensor (7).

7. Harvesting attachment (2) or self-propelled agricultural working machine (1) provided therewith according to one of the preceding claims,
**characterized**
**in that** the grain loss sensor (7) has
- an impact plate (10) for detecting the grain loss
- and preferably additionally a deflection plate (19) for guiding the lost grains of the grain loss, from the respective conveying chain (9) to the impact plate (10).

8. Harvesting attachment (2) or self-propelled agricultural working machine (1) provided therewith according to one of the preceding claims,
**characterized**
**in that** the grain loss sensor (7)
- forms an impact-plate balance,
- has a piezoelectric sensor,
- has a capacitive sensor and/or
- has an inductive sensor.

9. Harvesting attachment (2) or self-propelled agricultural working machine (1) provided therewith according to one of the preceding claims,
**characterized**
- **in that** the grain loss sensor (7) has an impact plate (10) which is intended and designed to detect the impact energy of the lost grains of the grain loss by means of a mechanical change and/or mechanical deflection of the impact plate (10),
- wherein the grain loss sensor (7) is intended and designed to determine the grain loss by means of the mechanical change and/or mechanical deflection of the impact plate (10).

10. Harvesting attachment (2) or self-propelled agricultural working machine (1) provided therewith according to one of the preceding claims,
**characterized**
- **in that** a grain loss sensor (7) is respectively assigned to each conveying chain (9), and/or
- **in that** the harvesting attachment (2) has at least one moisture sensor (7) for detecting a moisture content of the crop (4) detached from the bearing part of the plant.

11. Harvesting attachment (2) or self-propelled agricultural working machine (1) provided therewith according to one of the preceding claims,
**characterized**
- **in that** the grain loss sensor (7) of the harvesting attachment (2) is arranged in the harvesting attachment (2) in such a way that the lost grains of the grain loss impact on the grain loss sensor (7).

## Revendications

1. Outil de récolte frontal (2) ou machine agricole (1) automotrice dotée d'un outil de récolte frontal (2),
- sachant que l'outil de récolte frontal (2) présente plusieurs unités de cueillage (5) pour la récolte de produits à récolter (4) disposés en rangées de plantes (3), et chaque unité de cueillage (5) comporte
- deux cylindres de cueillage (6) pour séparer les produits à récolter (4) d'une partie de plante portant les produits à récolter (4),
- deux chaînes de convoyage (9) pour transporter la récolte (4), et
- un dispositif de hachage (22),
- sachant que l'outil de récolte frontal (2) comprend au moins un capteur de perte de grain (7) destiné à détecter une perte de grain de grains perdus de la récolte (4) séparée de la partie de plante la portant,
- l'outil de récolte frontal (2) ou la machine agricole (1) automotrice présentant un dispositif de commande et/ou de réglage (8) qui est prévu et conçu pour régler, commander et/ou réguler une vitesse de rotation de cylindre de cueillage pour tous les cylindres de cueillage (6) de l'ensemble des unités de cueillage (5) de l'outil de récolte frontal (2)
- en fonction de la perte de grain détectée à l'aide du capteur de perte de grain (7), mais
- indépendamment des vitesses de rotation d'autres composants de l'outil de récolte frontal (2), et en particulier
- indépendamment de la vitesse de rotation des chaînes de convoyage (9).

2. Outil de récolte frontal (2) ou machine agricole (1) automotrice dotée de celui-ci, selon la revendication 1,
**caractérisé en ce que**
- le capteur de perte de grain (7) de l'outil de récolte frontal (2) est disposé dans ledit outil de récolte frontal (2) de manière à ce que les grains perdus de la perte de grain heurtent le capteur de perte de grain (7), et
- **en ce que** le capteur de perte de grain (7) est prévu et conçu pour détecter la perte de grain en fonction de l'impact des grains perdus.

3. Outil de récolte frontal (2) ou machine agricole (1) automotrice dotée de celui-ci, selon une des revendications précédentes,
**caractérisé en ce que**
le dispositif de commande et de réglage (8) est prévu et conçu pour réduire la vitesse de rotation d'un cylindre de cueillage (6) d'au moins une unité de cueillage (5) de l'outil de récolte frontal (2), aux fins de réduire la perte de grain détectée à l'aide du capteur de perte de grain (7).

4. Outil de récolte frontal (2) ou machine agricole (1) automotrice dotée de celui-ci, selon une des revendications précédentes,
**caractérisé en ce que**
la machine agricole (1) automotrice et/ou l'outil de récolte frontal (2) présente au moins un capteur d'humidité pour détecter une humidité des produits de récolte (4) séparés de la partie de plante qui les porte,
le dispositif de commande et de réglage (8) étant prévu et conçu pour régler la vitesse de rotation de tous les cylindres de cueillage (6) de l'ensemble des unités de cueillage (5), en fonction
- de la perte de grain détectée à l'aide du capteur de perte de grain (7), et
- de l'humidité de la récolte détectée à l'aide du capteur d'humidité,
et pour la régler notamment de manière à ce que
- en cas de récolte humide, une vitesse de rotation de cylindre de cueillage plus élevée soit réglée,
- tandis qu'en cas de récolte sèche, une vitesse de rotation de cylindre de réglage plus faible soit réglée, notamment une vitesse de rotation plus faible comparée à la vitesse de rotation de cylindre de cueillage plus élevée.

5. Outil de récolte frontal (2) ou machine agricole (1) automotrice dotée de celui-ci, selon une des revendications précédentes,
**caractérisé en ce que**
le capteur de perte de grain (7) de l'outil de récolte frontal (2) est disposé entre deux unités de cueillage (5) de l'outil de récolte frontal (2).

6. Outil de récolte frontal (2) ou machine agricole (1) automotrice dotée de celui-ci, selon une des revendications précédentes,
**caractérisé en ce que**
les chaînes de convoyage (9) sont prévues et conçues pour amener les grains perdus de la perte de grain au capteur de perte de grain (7).

7. Outil de récolte frontal (2) ou machine agricole (1) automotrice dotée de celui-ci, selon une des revendications précédentes,
**caractérisé en ce que**
le capteur de perte de grain (7) présente
- une plaque d'impact (10) destinée à détecter la perte de grain
- et de préférence en plus une plaque déflectrice (19) destinée à guider les grains perdus de la perte de grain, en partant de la chaîne de convoyage (9) respective jusqu'à la plaque d'impact (10).

8. Outil de récolte frontal (2) ou machine agricole (1) automotrice dotée de celui-ci, selon une des revendications précédentes,
**caractérisé en ce que**
le capteur de perte de grain (7)
- constitue une balance à plaque d'impact,
- présente un capteur piézoélectrique,
- présente un capteur capacitif et/ou
- présente un capteur inductif.

9. Outil de récolte frontal (2) ou machine agricole (1) automotrice dotée de celui-ci, selon une des revendications précédentes,
**caractérisé en ce que**
- le capteur de perte de grain (7) présente une plaque d'impact (10) qui est prévue et conçue pour détecter l'énergie d'impact des grains perdus de la perte de grain, par le biais d'une modification mécanique et/ou d'une déviation mécanique de la plaque d'impact (10),
- le capteur de perte de grain (7) étant prévu et conçu pour déterminer la perte de grain, par le biais de la modification mécanique et/ou de la déviation mécanique de la plaque d'impact (10),

10. Outil de récolte frontal (2) ou machine agricole (1) automotrice dotée de celui-ci, selon une des revendications précédentes,
**caractérisé en ce que**
- un capteur de perte de grain (7) est associé à chaque chaîne de convoyage (9), et/ou
- **en ce que** l'outil de récolte frontal (2) présente au moins un capteur d'humidité (7) pour détecter une humidité des produits à récolter (4) séparés de la partie de plante les portant.

11. Outil de récolte frontal (2) ou machine agricole (1) automotrice dotée de celui-ci, selon une des revendications précédentes,
**caractérisé en ce que**
- le capteur de perte de grain (7) de l'outil de récolte frontal (2) est disposé dans l'outil de récolte frontal (2) de manière à ce que les grains perdus de la perte de grain heurtent le capteur de perte de grain (7).
